# EUROPÄISCHE PATENTSCHRIFT

(11) **EP 2 519 400 B1**
(45) Veröffentlichungstag und Bekanntmachung des Hinweises auf die Patenterteilung: **16.10.2019**
(21) Anmeldenummer: 10799055.8
(22) Anmeldetag: 29.12.2010
(51) Int. Cl.: B29C 70/44, B29D 99/00

(54) **INFUSIONSVERFAHREN UND AUFBAU EINES INFUSIONSVERFAHRENS**
INFUSION METHOD AND STRUCTURE FOR CARRYING OUT AN INFUSION METHOD
PROCÉDÉ D'INFUSION ET STRUCTURE POUR LA MISE EN OEUVRE D'UN PROCÉDÉ D'INFUSION

(30) Priorität: 12.12.2010 DE 102010062871; 29.12.2009 US 290515 P; 29.12.2009 DE 102009060705
(43) Veröffentlichungstag der Anmeldung: 07.11.2012
(73) Patentinhaber: Airbus Operations GmbH, 21129 Hamburg (DE)
(72) Erfinder: HEIM, Clemens, 21684 Stade (DE); SEEGEL, Hauke, 21369 Nahrendorf (DE); FIDEU, Paulin, 21682 Stade (DE); HERRMANN, Axel, 21682 Stade (DE)
(74) Vertreter: LKGLOBAL Lorenz & Kopf PartG mbB Patentanwälte
(86) Internationale Anmeldenummer: PCT/EP2010/070830
(87) Internationale Veröffentlichungsnummer: WO 2011/080289

(56) Entgegenhaltungen:
- EP-A1- 1 859 920
- EP-A2- 1 484 164
- DE-A1-102007 061 431
- US-A1- 2003 019 567
- US-A1- 2008 305 340

## Beschreibung

Die Erfindung betrifft ein Infusionsverfahren in einem einseitig offenen Werkzeug nach dem Oberbegriff des Patentanspruchs 1 sowie einen Aufbau für ein Infusionsverfahren zur Herstellung eines faserverstärkten Verbundbauteils in einem einseitig offenen Werkzeug nach dem Oberbegriff des Patentanspruchs 8.

Ein Aufbau eines bekannten Infusionsverfahrens zur Herstellung eines faserverstärkten Verbundbauteils in einem einseitig offenen Werkzeug ist in Figur 1 gezeigt. Bei diesem Zweikammer-Aufbau 1, der dem in dem Patent DE 10013409C1 ausführlich beschriebenen Vakuum-Assisted-Process (VAP) zugrunde liegt, wird auf einer Oberfläche 2 eines einseitig offenen Werkzeugs 4 ein Bauteil 6 aus zumindest einem trockenen faserverstärktem Halbzeug, beispielsweise ein Fasergelege aus einer Vielzahl von Kohlenstofffasern, abgelegt. Das Werkzeug 4 ist in einer Vakuumkammer 8 angeordnet, die von einer das Bauteil 6 umhüllenden Vakuumfolie 10 gebildet ist und die sich über Dichtelemente 12 auf der Oberfläche 2 des Werkzeugs 4 abstützt. Die Evakuierung der Vakuumkammer 8 erfolgt über eine werkzeugnahe Absaugung 14. Zur Infiltrierung des Bauteils 6 mit einem Matrixmaterial, beispielsweise einem Epoxidharz, ist ein werkzeugferner Anguss 16 zur Zuführung des Harzes vorgesehen. Die Verteilung des Harzes über das Bauteil 6 erfolgt über eine globale, das Halbzeug 6 überspannende Fließhilfe 18, die über eine Lochfolie 20 und ein Abreißgewebe 22 von einer Bauteiloberfläche 24 beabstandet ist. Die Fließhilfe 18, die Lochfolie 20, das Abreißgewebe 22 sowie das Bauteil 6 sind von einer Membran 26 abgedeckt, die mit der Vakuumfolie 10 eine Luftkammer 28 begrenzt und über Dichtelemente 12 an der Werkzeugoberfläche 2 angreift. Die Membran 26 hat semipermeable Eigenschaften und weist meistens eine Struktur aus einem technischen Kunststoffmaterial auf. Sie ist für Gase bzw. flüchtige Stoffe durchlässig, hält jedoch Flüssigkeiten mit Viskositäten vergleichbar Wasser zurück. Diese semipermeablen Eigenschaften werden durch in der Membran 26 befindliche durchlässige Poren bzw. Maschen erreicht, welche mehr oder minder gleichmäßig auf der Membranoberfläche verteilt sind. Die Dicke der Membran bewegt sich gewöhnlich im Zehntel-Millimeterbereich. Im Prinzip schottet die Membran 26 den zu durchtränkenden Aufbau einschließlich der Fließhilfe 18 gegenüber der Vakuumfolie 10 ab, wobei durch die globale Luftkammer 28 eine flächige Vakuumverteilung auf der Oberfläche 24 des Halbzeugs 6 erzielt wird. Zur verbesserten bzw. gezielten Führung der Luft bzw. Gase in der Luftkammer 28 in Richtung der Absaugung 14 ist zwischen der Membran 26 und der Vakuumfolie 10 ein Belüftungsgewebe 30 angeordnet.

Diese bekannte Aufbau eignet sich jedoch nur begrenzt für die Herstellung komplexer Bauteile, da insbesondere die Membran ein hochkomplexer und sensibler Hilfsstoff ist, der bei fehlerhafter Drapierung seine semipermeablen Eigenschaften verliert sowie sehr schnell einreißen kann, so dass in dem herzustellenden Bauteil Fehlstellen generiert werden und die Bauteile somit eine mindere Qualität aufweisen. Darüber hinaus ist die Membran sehr teuer, so dass sich der Ersatz eingerissener bzw. geschädigter Membran unweigerlich in hohen Materialkosten wiederspiegelt.

Die US 2008 0093761 zeigt ein Infusionsverfahren zur Herstellung eines Rotorblattes einer Windenergieanlage. US 2008 0093761 beschreibt ein Verfahren zum Erzeugen eines länglichen Mantelteils aus einem Faser-Verbundwerkstoff mittels Vakuuminfusion, wobei das Fasermaterial mit flüssigem Polymer imprägniert ist, und Verwendung einer Form mit einem Formenhohlraum, in dem ein Fasereinsatz mit einer ersten Seitenflache und einer zweiten Seitenflache angeordnet wird, und wobei der Fasereinsatz ferner eine Vielzahl von Faserschichten und eine Verteilungsschicht aufweist, wobei die Verteilungsschicht eine höhere Durchflussrate für das flüssige Polymer als die Faserschichten zulasst, wobei eine halbdurchlässige Membran gegenüber der ersten Seitenflache des Fasereinsatzes angeordnet wird und die halbdurchlässige Membran für Gase im wesentlichen durchlässig und für flüssiges Polymer im wesentlichen undurchlässig ist und ferner mit einer Vakuumquelle kommuniziert, wobei die Verteilungsschicht im Inneren des Fasereinsatzes mit Faserschichten an beiden Seiten angeordnet wird und von einer Zone unterbrochen wird, wobei diese Zone gegenüber der halbdurchlässigen Membran positioniert ist, und dass flüssiges Polymer durch Einlasskanale zu der Verteilungsschicht geleitet wird und dadurch eine Strömungsfront zwischen der Verteilungsschicht und der zweiten Seitenflache erzeugt, wird, wobei sich diese Strömungsfront durch die Zone in Richtung zu der halbdurchlässigen Membran bewegt.

Aufgabe der vorliegenden Erfindung ist es, ein Infusionsverfahren sowie einen Aufbau für ein Infusionsverfahren in einem einseitig offenen Werkzeug zu schaffen, das die vorgenannten Nachteile beseitigt und die sichere Herstellung komplexer Bauteile mit wiederholbarer hoher Qualität ermöglicht.

Diese Aufgabe wird gelöst durch ein Infusionsverfahren mit den Merkmalen des Patentanspruchs 1 und durch einen Aufbau für ein Infusionsverfahren mit den Merkmalen des Patentanspruchs 8.

Bei einem erfindungsgemäßen Infusionsverfahren zur Herstellung eines faserverstärkten Verbundbauteils mit textilen Halbzeugen, die das von einem Matrixmaterial zu infiltrierende Verbundbauteil bilden, werden die Halbzeuge in einem einseitig offenen Werkzeug in einer zu evakuierenden Kammer angeordnet. Erfindungsgemäß wird zwischen dem Verbundbauteil und einer Kammerwandung zumindest ein lokaler Gasaufnahmeraum gebildet wird, der durch zumindest eine lokale gasdurchlässige Membran gegenüber dem Matrixmaterial abgesperrt wird, und in den beim Infiltrieren im Matrixmaterial und/oder im Aufbau enthaltene flüchtige Stoffe entweichen.

Das erfindungsgemäß als Local-Assisted-Vacuum-Process (L-VAP) bezeichnete Verfahren eignet sich zur kostengünstigen Herstellung komplexer Bauteile in wiederholbarer hoher Qualität, da durch die lokale Gasaufnahmeraumbildung der Drapieraufwand der lokalen Membran bzw. lokalen Membranen vereinfacht wird und weiterhin großflächig flüchtige Bestandteile, die im Aufbau und im Harz enthalten sind, entweichen können. Die Ausbildung einer globalen, das zu fertigende Bauteil umspannenden Luftkammer entfällt, sondern es werden lediglich gezielte lokale bzw. partielle Gasaufnahmeräume gebildet, die die sichere Entnahme von im Aufbau und im Harz enthalten flüchtigen Bestandteilen wie Gase und Restluft ermöglichen, dank der lokalen Membranen das Matrixmaterial jedoch zurückgehalten wird. Das erfindungsgemäße Verfahren erlaubt zudem eine einfache Drapierung der zumindest einen Membran, so dass sie ihre gasdurchlässigen bzw. Matrixmaterial-blockierenden Eigenschaften nicht verliert bzw. diese nicht gemindert werden. Hierdurch wird die Gefahr von Fehlstellen innerhalb des Bauteils wesentlich verringert und somit die Bauteilqualität signifikant und wiederholbar gesteigert. Zudem ermöglicht das Verfahren den Verzicht auf eine während der Harzinfusion bestehende Absaugung, so dass der vorrichtungstechnische Aufwand reduziert wird. Weiterhin ist es bei der erfindungsgemäßen Lösung nicht mehr notwendig, die exakte Position des in Fließfronten von mehreren Seiten her zusammenlaufenden Matrixmaterials zu kennen.

Um zu vermeiden, dass die Struktur der Membran nachteilig verändert wird und eventuell seine semipermeablen Eigenschaften verliert, wird die Membran vorzugsweise bei ebenen bzw. wenig gewölbten Flächen oder bei zwar stark jedoch nur einfach gekrümmten Oberflächen eingesetzt.

Bei einem Ausführungsbeispiel wird der zumindest eine Gasaufnahmeraum beim Evakuieren der Kammer mit evakuiert. Hierdurch wird sichergestellt, dass der Gasaufnahmeraum frei von Gasen ist und eine maximales Aufnahmevolumen aufweist.

Der zumindest eine Gasaufnahmeraum kann im Bereich von zusammenlaufenden Fließfronten angeordnet werden, so dass die von dem Matrixmaterial vor sich her getriebenen Gase verlässlich in den Gasaufnahmeraum getrieben werden.

Gemäß der Erfindung wird in dem zumindest einen Gasaufnahmeraum zumindest ein formstabiler Gasspeicher angeordnet. Hierdurch wird verhindert, dass beim Evakuieren der Kammer das Aufnahmevolumen des Gasaufnahmeraums verkleinert wird. Zudem weist der Gasspeicher ein stabiles maximales Speichervolumen auf. Dabei kann die zumindest eine Membran direkt an dem Gasspeicher angeordnet sein, so dass der Gasspeicher den Gasaufnahmeraum unmittelbar bildet.

Der zumindest eine Gasspeicher kann derart formstabil sein, dass er zur Stützung eines Bauteilbereichs eingesetzt werden kann. Der Gasspeicher wirkt bei dieser Variante als Druckstück bzw. Werkzeugkern, wodurch bei der Verwendung einer Vielzahl von derartigen Gasspeichern die Teileanzahl aufgrund der Multifunktionalität der Gasspeicher reduziert wird und trotz der lokalen Anordnung der Gasspeicher eine nahezu flächige Gasentnahme erfolgt. Zudem werden durch die Verwendung der Gasspeicher als Formgebungselemente Druckstellen auf dem Verbundbauteil vermieden.

Bei einer kostengünstigen Variante wird der zumindest eine Gasspeicher mit einem geschlossenen bzw. versiegelten
Formgebungselement zur Stützung eines Bauteilbereichs kombiniert.

Die in den zumindest einen Gasaufnahmeraum bzw. den zumindest einen Gasspeicher entweichenden Gase können über eine Absaugung aus dem Gasaufnahmeraum bzw. dem Gasspeicher abgeführt werden. Hierdurch kann der Verlauf der Fließfronten gezielt gesteuert werden. Zudem können bspw. der zumindest eine Gasspeicher mit einem kleineren Speichervolumen ausgelegt werden.

Ein erfindungsgemäßer Aufbau für ein Infusionsverfahren zur Herstellung eines faserverstärkten Verbundbauteils mit textilen Halbzeugen, die in einer zu evakuierenden Kammer in einem einseitig offenen Werkzeug abgelegt sind und das von einem Matrixmaterial zu infiltrierenden Verbundbauteil bilden, weist erfindungsgemäß zur Aufnahme von im Matrixmaterial und/oder im Aufbau enthaltenen flüchtigen Stoffen zumindest einen lokalen Gasaufnahmeraum zwischen dem Verbundbauteil und einer Kammerwandung auf, der durch zumindest eine lokale gasdurchlässige Membran gegenüber dem Matrixmaterial abgesperrt ist.

Ein derartiger Aufbau eignet sich insbesondere zur kostengünstigen Herstellung komplexer Bauteile mit hoher reproduzierbarer Qualität, da der zumindest eine lokale Gasaufnahmeraum bzw. die partiellen Gasaufnahmeräume an Bauteilbereichen ausgebildet sein können, die eine einfache Geometrie wie zum Beispiel eine ebene bzw. nur leicht gekrümmte Oberfläche oder aber eine zwar stark jedoch nur einfach gekrümmte Oberfläche aufweisen. Ein Beispiel für eine einfach stark gekrümmte Oberfläche ist ein stufenförmiger bzw. rechtwinkliger Oberflächenverlauf wie im Anbindungsbereich von Versteifungselementenfüßen an Hautfeldern möglich. Hierdurch ist eine Beschädigung der lokalen Membran ausgeschlossen und somit eine optimale Funktionsfähigkeit der Membran gewährleistet. Zudem ist durch eine entsprechende Anzahl von Gasaufnahmeräumen eine großflächige Absaugung gewährleistet.

Gemäß der Erfindung ist in dem zumindest einen Gasaufnahmeraum ein Gasspeicher positioniert, der die Speicherung
der flüchtigen Gase erlaubt. Die Erfindung zeichnet sich durch einen besonders einfachen Aufbau auf, da der Gasspeicher bzw. die Gasspeicher aufgrund seiner Robustheit nahezu flexibel an dem Halbzeug positioniert werden kann/können und die Bereitstellung einer individuellen Absaugung entfällt. Die Gasspeicher lassen sich bequem an gekrümmten oder kantigen bzw. stufenförmigen Bauteiloberflächen positionieren, ohne dass eine wesentliche Beeinträchtigung ihres Speichervolumens zu befürchten ist. Die Gasspeicher lassen sich individuell Formen bspw. Zuschneiden, Fräsen oder Aufbohren und können somit optimal an den jeweiligen Bauteilbereich angepasst sein. Der zumindest eine Gasspeicher hat eine offenporige bzw. poröse Materialstruktur ähnlich einem Schwamm oder einem Schaum. Beispielhafte Ausführungsbeispiele sind ein offenporiger Metallschaum oder ein offenporiger Kunststoffschäum.

Bei einem Ausführungsbeispiel ist an einer einem Bauteilbereich zugewandten Kontaktfläche des zumindest einen Gasspeichers die Membran lösbar angeordnet. Hierdurch entfällt die Positionierung der Membran an dem Bauteilbereich, was die Montage bzw. den Drapiervorgang wesentlich vereinfacht. Dabei kann durch die lösbare Anordnung der Membran diese nach Erschöpfung einfach entfernt und gegen eine neue Membran ausgetauscht werden, ohne dass der Gasspeicher an sich zu entsorgen ist.

Bevorzugterweise ist der zumindest eine Gasspeicher formstabil, so dass er bei einer Evakuierung der Kammer keiner Formveränderung unterliegt und sicher gestellt ist, dass er stets sein maximales Speichervolumen aufweist.

Bei einem Ausführungsbeispiel bildet der zumindest eine Gasspeicher zumindest einen Abschnitt eines Formgebungselementes. Hierdurch wird die Teilevielfalt des Aufbaus reduziert und insbesondere kann trotz der gezielten lokalen Gasaufhahmeraumbildung eine großflächige Gasaufnahme erfolgen. Ein als Formgebungselement bzw. Druckstück besonders geeigneter
erfindungsgemäßer Gasspeicher hat eine feste Rahmenstruktur mit teilweise offenen und/oder durchlässigen Bereichen. Der Hohlraum kann beispielsweise über Bohrungen bzw. bohrungsartige Öffnungen in der Wandung zur Außenumgebung bereichsweise geöffnet sein.

Ebenso kann der Gasspeicher eine gitterartige Wandung aufweisen, über deren Gittermaschen eine Evakuierung des Hohlraums und eine Gasaufnahme erfolgen kann. Zu Vermeidung eines Harzeintritts durch die Öffnungen bzw. die Gittermaschen in den Hohlraum kann der jeweilige Gasspeicher mit jeweils einer Membran bespannt sein.

Bei einem Ausführungsbeispiel steht der zumindest eine Gasaufnahmeraum bzw. der zumindest eine Gasspeicher mit einer Absaugung in Fluidverbindung, so dass bspw. die aus dem Matrixmaterial in die Gasaufnahmeräume entwichenen flüchtigen Stoffe bspw. einer Reinigung unterzogen werden können.

Sonstige vorteilhafte Ausführungsbeispiele sind Gegenstand weiterer Unteransprüche.

Im Folgenden werden bevorzugte Ausführungsbeispiele anhand schematischer stark vereinfachter Darstellungen näher erläutert. Es zeigen:
- Figur 1: einen bekannten Aufbau eines Infusionsverfahrens,
- Figur 2: einen Aufbau nach einem LocalAssisted-Vacuum-Process (L-VAP), der nicht Teil der Erfindung ist,
- Figur 3: einen zweiten Aufbau nach dem erfindungsgemäßen Infusionsverfahren,
- Figur 4: eine weitere Darstellung des zweiten Aufbaus, und
- Figur 5: einen dritten Aufbau nach dem erfindungsgemäßen Infusionsverfahren.

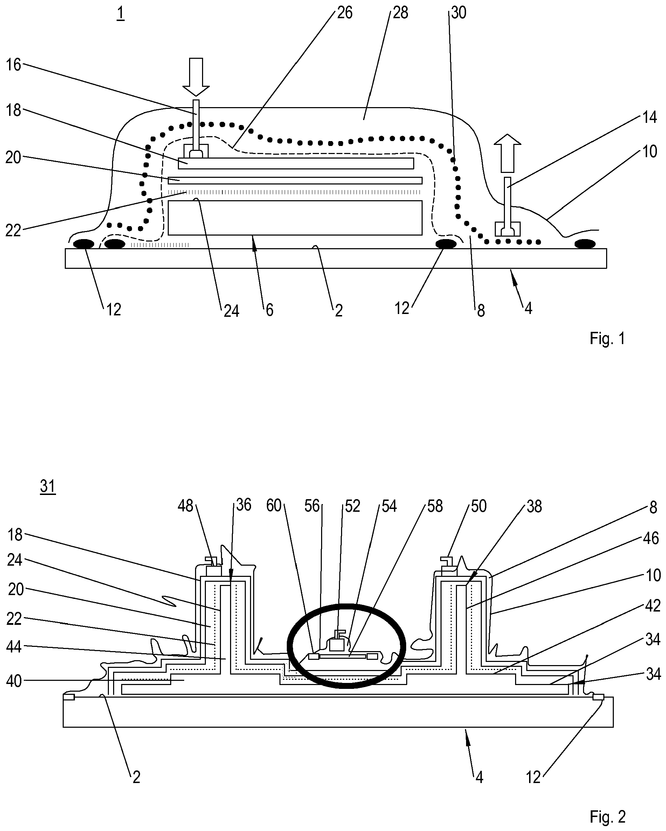

Figur 2 zeigt einen Querschnitt durch einen Aufbau 31 zur Herstellung eines monolithischen faserverstärkten Verbundbauteils 32. Das zu fertigende Bauteil 32 besteht aus einer Vielzahl von trockenen Fasergelegen, Gewirken, Geweben oder ähnlichem und wird bei der Herstellung mit einem Matrixmaterial, beispielsweise einem Epoxid- oder Polyesterharz, über seinen Querschnitt getränkt. In dem gezeigten Ausführungsbeispiel ist das Bauteil 32 ein Hautfeld eines Flugzeugrumpfes, das von einem die Außenhaut des Flugzeugs bildenden Flächengebilde 34 und von das Flächengebilde 34 stabilisierenden Stringern 36, 38 gebildet wird. Die Stringer 36, 38 haben jeweils einen Fußabschnitt 40, 42, über den sie an dem Flächengebilde 34 angebacken werden, und jeweils einen mittig auf dem Fußabschnitt 40, 42 angeordneten Steg 44, 46. Die Krümmung des Flächengebildes 34 bzw. des Hautfeldes ist aus Gründen der Übersichtlichkeit nicht dargestellt. Ebenso sind in Figur 2 aus Gründen der Übersichtlichkeit keine die Stringer 36 während der Herstellung seitlich stabilisierende Formgebungselemente wie Werkzeugkerne bzw. Druckstücke gezeigt.

Das Bauteil 32 ist über das Flächengebilde 34 auf einer Oberfläche 2 eines einseitig geöffneten Werkzeugs 4 abgelegt und in einer von einer Vakuumfolie 10 gebildeten Vakuumkammer 8 positioniert. Die Vakuumfolie 10 umschließt das Halbzeug 6 und ist über an dem Werkzeug 4 angreifenden Dichtelementen 12 gegenüber der Außenumgebung abgedichtet.

Die Zufuhr des Harzes in die Vakuumkammer 8 und somit zu dem zu fertigenden Bauteil 32 erfolgt über Angüsse 48, 50, die werkzeugfern im Bereich von Kopfabschnitten der Stege 44, 46 angeordnet sind. Zur Verteilung des Harzes über das Bauteil 32 ist eine globale Fließhilfe 18 auf dem Bauteil 32 angeordnet und über eine Lochfolie 20 sowie eine Vielzahl von einzelnen Abreißgeweben 22 von der Bauteiloberfläche 2 beabstandet.

Die Absaugung von im Aufbau und im Harz sich befindenden Gasen bzw. flüchtigen Stoffen erfolgt über zumindest eine werkzeugnahe Absaugung 52, die in vertikaler Richtung betrachtet unterhalb der Angüsse 48, 50 zwischen den Fußabschnitten 40, 42 der Stringer 36, 38 angeordnet ist und durch ein ovale Umrandung zeichnerisch hervorgehoben ist. Dabei ist die Absaugung 52 bevorzugterweise im Bereich von zusammenlaufender Harzfronten bzw. Fließfronten positioniert, da diese die Restluft in der Vakuumkammer 8 und sonstige sich aus dem Harz lösenden Gasen quasi vor sich hertreiben. Die Absaugung 52 steht mit einem lokalen Gasaufnahmeraum 54 in Fluidverbindung, der zwischen einer Kammerwandung bzw. einem Folienabschnitt 56 und einer bauteilseitigen Membran 58 gebildet und seitlich von zumindest einem umlaufenden bzw. mehreren Dichtelementen 60 begrenzt ist, über das sich der Folienabschnitt 56 auf der Fließhilfe 18 abstützt. Die Membran 58 hat semipermeable Eigenschaften und erlaubt den Austritt der Restluft bzw. der Gase aus der Vakuumkammer 8 und dem Harz in den Gasaufnahmeraum 54, verhindert jedoch den Eintritt des Harzes. Somit sperrt die Membran 58 den Gasaufnahmeraum 54 gegenüber dem Harz ab, wodurch ein Abströmen des flüssigen Harzes in die Absaugung 52 verhindert wird.

Bei einem Infusionsverfahren wird das zu fertigende Bauteil 32 gemäß dem Aufbau 31 eingepackt. Dann wird die Vakuumkammer 8 über die Absaugung 52 bzw. eine Vielzahl der Absaugungen 52 evakuiert und über die Angüsse 48, 50 das Harz zugeführt, das über die Fließhilfe 18 gleichmäßig über die Bauteiloberfläche 24 verteilt wird. Das Harz durchdringt die Stringer 36, 38 sowie das Flächengebilde 34 in vertikaler bzw. Dickenrichtung, wobei sich zwei aufeinander zu bewegende Fließfronten ausbilden (nicht gezeigt). Die Fließfronten treiben die sich im Aufbau 31 befindende Restluft sowie die in dem Harz enthaltenen Gase bzw. flüchtigen Stoffe vor sich her bis diese durch die jeweilige partielle semipermeable Membran 58 in die lokalen Gasaufnahmeräume 54 eintritt und dort abgesaugt wird. Beim Zusammentreffen der Fließfronten ist das Bauteil 32 vollständig mit dem Harz durchtränkt und über die Gasaufnahmeräume 54 entgast. Dabei wird durch die Membranen 58 verhindert, dass das flüssige Harz über die Gasaufnahmeräume 54 wieder aus dem Bauteil 32 gedrückt wird bzw. abfließt. Nach dem Durchtränken des Bauteils 32 wird dieses ausgehärtet und anschließend weiteren Bearbeitungsschritten wie einer Qualitätskontrolle zugeführt.

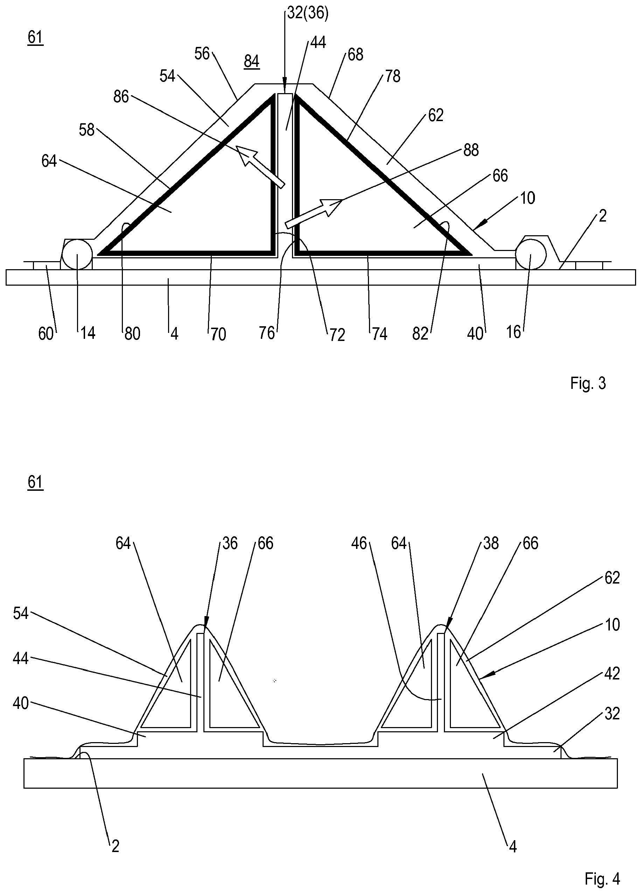

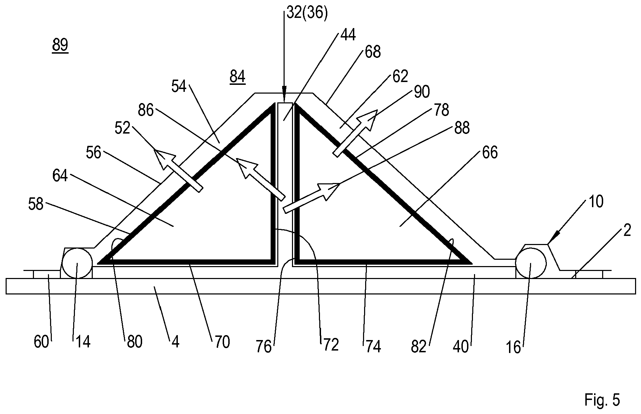

Figur 3 zeigt einen Querschnitt durch einen zweiten erfindungsgemäßen Aufbau 61 zur Herstellung eines Verbundbauteils 32 aus einer Vielzahl von in einem offenen Werkzeug 4 positionierten textilen Halbzeugen. Aus Gründen der Übersichtlichkeit ist das Verbundbauteil 32 als ein T-förmiges Versteifungselement 36 gezeigt. Im Wesentlichen Unterschied zum Aufbau 31 nach Figur 2 ist bei diesem Aufbau 61 in Gasaufnahmeräumen 54, 62 jeweils ein Gasspeicher 64, 66 positioniert, die neben einer Speicherung der aus dem Matrixmaterial bzw. dem Aufbau aufgenommenen flüchtigen Stoffe zudem als Formgebungselemente für das Versteifungselement 36 wirken. Zudem ist bei der in Figur 3 gezeigten Variante keine Absaugung 52 vorgesehen (bzgl. Absaugung s. Figur 5).

Die Gasaufnahmeräume 54, 62 erstrecken sich seitlich des Versteifungselements 36 über dessen gesamte axiale Länge und werden im Wesentlichen von dessen Fußabschnitt 40, dessen Steg 44 sowie jeweils einem Folienabschnitt 56, 68 einer Vakuumfolie 10 begrenzt. Somit weisen die Gasaufnahmeräume 54, 62 einen dreieckigen Querschnitt auf. Zum druckdichten Abschließen der Gasaufnahmeräume 54, 62 ist seitlich des Fußabschnittes 40 auf einer Werkzeugoberfläche 2 ein Dichtelement 60 angeordnet, an dem die Vakuumfolie 10 angreift. Zur Evakuierung des Aufbaus 61 ist seitlich des Fußabschnittes 40 zumindest eine Absaugung 14 angeordnet. Zur Infusion des Harzes ist seitlich des Fußabschnittes 40 zumindest ein Anguss 14 positioniert.

Die Gasspeicher 64, 66 haben einen den Gasaufnahmeräumen 54, 56 entsprechenden dreieckigen Querschnitt und weisen eine offenporige Materialstruktur zur Speicherung der in die Gasaufnahmeräume 54, 62 aus dem Verbundbauteil 32 verdrängten Restluft auf. Um zu verhindern, dass deren Poren durch das Matrixmaterial zugesetzt werden, sind die Gasspeicher 64, 66 an ihren dem Versteifungselement 36 zugewandten und mit diesen sich in Kontakt befindenden Kontaktflächen 70, 72, 74, 76 mit einer semipermeablen Membran 58, 78 versehen. Somit sind die die Gasaufnahmeräume 56, 62 bildenden Membranen 58, 78 an die Gasspeicher 58, 78 angebunden, wodurch diese unmittelbar die Gasaufnahmeräume 56, 62 bilden. Zudem erstrecken sich die Membranen 58, 78 über eine dem jeweiligen Folienabschnitt 56, 68 der Vakuumfolie 10 zugewandte Außenfläche 80, 82, so dass die Gasspeicher 64, 66 zumindest im Bereich ihrer Seitenflächen 70, 72, 80 bzw. 74, 76, 82 mit jeweils einer der Membranen 58, 78 versehen sind. Dabei sind die Membranen 58, 78 lösbar an den Gasspeichern 64, 66 befestigt, so dass sie bei Erschöpfung gegen funktionsfähige Membranen 58, 78 ausgetauscht werden können. Selbstverständlich können jedoch auch die Gasaufnahmeräume 56, 62 mit einer Membran 58, 78 gegenüber dem Matrixmaterial abgesperrt sein und die Gasspeicher 64, 66 dann mit ihren freien Seitenflächen 70, 72, 74, 76, 80, 82 in diesen positioniert sein.

Zur besseren Sichtbarmachung der Membranen 58, 78 sind diese in der Figur 3 und auch insbesondere in den Figuren 4 und 5 von dem Fußabschnitt 44 und dem Steg 40 über jeweils einen Spalt beabstandet dargestellt. Ebenso sind zur besseren Sichtbarmachung der Gasaufnahmeräume 54, 62 in der Figur 3 und auch insbesondere in den Figuren 4 und 5 die Kammerwandungen 56, 68 von den Gasspeichern 64, 64 bzw. deren außenflächenseitigen Membranabschnitten über jeweils einen Spalt beabstandet dargestellt.

Bei einer Evakuierung des zu infiltrierenden Verbundbauteils 32 über die Absaugung 14 werden durch die gasdurchlässigen Eigenschaften der Membranen 58, 78 ebenfalls die Gasaufnahmeräume 54, 62 und somit die Gasspeicher 64, 66 evakuiert, so dass der Aufbau 61 einen gleichmäßigen Unterdruck gegenüber seiner Außenumgebung 84 aufweist. Bei der Infusion des Harzes über den bzw. die Angusse 16 bleibt der Unterdruck in den Gasaufnahmeräumen 54, 62 bestehen, so dass die Gasspeicher 64, 66 die in dem Aufbau verbleibende Restluft aufnehmen kann (s. Pfeile 86, 88).

Übertragen auf ein zu infiltrierenden Verbundbauteil 32 mit einer Vielzahl von voneinander beabstandeten Versteifungselementen 36, 38 bedeutet dies wie in Figur 4 stark vereinfacht gezeigt, dass die Versteifungselemente 36, 38 von den formstabilen und als Formgebungselemente wirkenden Gasspeichern 64, 66 stabilisiert werden und zwischen den Versteifungselementen 36, 38 kein Gasaufnahmeraum 54, 62 ausgebildet bzw. Gasspeicher 64, 66 angeordnet ist, so dass trotz einer lokalen bzw. partiellen Anordnung der Gasspeicher 64, 66 ein flächiges Entweichen der Restluft aus dem Verbundbauteil 32 ermöglicht wird.

Figur 5 zeigt einen dritten erfindungsgemäßen Aufbau 89. Dieser Aufbau 91 basiert auf dem in den Figuren 3 und 4 erläuterten zweiten Aufbau 61 und weist als einzigen Unterschied jeweils eine einem Gasspeicher 64, 66 zugeordnete Absaugung (Pfeile 52, 90) auf, über die die von den Gasspeichern 64, 66 gespeicherten flüchtigen Stoffe kontinuierlich oder diskontinuierlich aus dem Aufbau 89 geführt werden können.

Offenbart ist ein Infusionsverfahren zur Herstellung eines faserverstärkten Verbundbauteils mit textilen Halbzeugen in einem offenen Werkzeug, bei dem zumindest ein lokaler Gasaufnahmeraum zur Aufnahme von im Matrixmaterial und/oder im Aufbau enthaltenen flüchtigen Stoffen wie Harzgase und Restluft ausgebildet wird, der über eine lokale semipermeable Membran zum Matrixmaterial abgesperrt ist, sowie ein Aufbau zur Durchführung eines derartigen Verfahrens.

### Bezugszeichenliste

- 1: Aufbau
- 2: Oberfläche
- 4: Werkzeug
- 6: Bauteil
- 8: Vakuumkammer
- 10: Vakuumfolie
- 12: Dichtelement
- 14: Absaugung (Auslass)
- 16: Anguss (Einlass)
- 18: Fließhilfe
- 20: Lochfolie
- 22: Abreißgewebe
- 24: Oberfläche
- 26: Membran
- 28: Luftkammer
- 30: Belüftungsgewebe
- 31: Aufbau
- 32: Bauteil
- 34: Flächengebilde
- 36: Stringer
- 38: Stringer
- 40: Fußabschnitt
- 42: Fußabschnitt
- 44: Steg
- 46: Steg
- 48: Anguss
- 50: Anguss
- 52: Absaugung
- 54: Gasaufnahmeraum
- 56: Kammerwandung
- 58: Membran
- 60: Dichtelement
- 61: Aufbau
- 62: Gasaufnahmeraum
- 64: Gasspeicher
- 66: Gasspeicher
- 68: Kammerwandung
- 70: Kontaktfläche
- 72: Kontaktfläche
- 74: Kontaktfläche
- 76: Kontaktfläche
- 78: Membran
- 80: Außenfläche
- 82: Außenfläche
- 84: Außenumgebung
- 86: Pfeil Restluft
- 88: Pfeil Restluft
- 89: Aufbau
- 90: Pfeil Absaugung

## Patentansprüche

1. Infusionsverfahren zur Herstellung eines faserverstärkten Verbundbauteils (32) mit textilen Halbzeugen, die in einem einseitig offenen Werkzeug (4) in einer zu evakuierenden Kammer (8) angeordnet werden und das von einem Matrixmaterial zu infiltrierende Verbundbauteil (32) bilden, wobei
zwischen dem Verbundbauteil (32) und einer Kammerwandung (56, 68) zumindest ein lokaler Gasaufnahmeraum (54, 62) gebildet wird, der durch zumindest eine lokale gasdurchlässige Membran (58, 78) gegenüber dem Matrixmaterial abgesperrt wird und in den beim Infiltrieren im Matrixmaterial und/oder im Aufbau (31; 61; 89) enthaltene flüchtige Stoffe entweichen, **dadurch gekennzeichnet, dass** in dem Gasaufnahmeraum (54, 62) zumindest ein formstabiler Gasspeicher (64, 66) angeordnet wird, und wobei der formstabile Gasspeicher (64, 66) eine offenporige Materialstruktur hat.

2. Infusionsverfahren nach Anspruch 1, wobei die Membran (58, 80) an ebenen bis wenig gewölbten Bauteilflachen positioniert wird.

3. Infusionsverfahren nach Anspruch 1 oder 2, wobei der Gasaufnahmeraum (54, 62) beim Evakuieren der Kammer (8) evakuiert wird.

4. Infusionsverfahren nach Anspruch 1, 2 oder 3, wobei der Gasaufnahmeraum (54, 62) im Bereich zusammenlaufender Fließfronten angeordnet wird.

5. Infusionsverfahren nach Anspruch 4, wobei der Gasspeicher (64, 66) zur Stützung eines Bauteilbereichs (40, 44) eingesetzt wird.

6. Infusionsverfahren nach Anspruch 5, wobei der Gasspeicher (64, 66) mit einem geschlossenen Formgebungselement zur Stützung eines Bauteilbereichs (40, 44) kombiniert wird.

7. Infusionsverfahren nach einem der vorhergehenden Ansprüche, wobei die Gase dem Gasaufnahmeraum (54, 62) über eine Absaugung (52, 90) entnommen werden.

8. Aufbau (31; 61; 89) für ein Infusionsverfahren zur Herstellung eines faserverstärkten Verbundbauteils (32) mit textilen Halbzeugen, die in einer zu evakuierenden Kammer (8) in einem einseitig offenen Werkzeug (4) abgelegt sind und das von einem Matrixmaterial zu infiltrierenden Verbundbauteil (32) bilden, wobei zur Aufnahme von im Matrixmaterial und/oder im Aufbau (31; 61; 89) enthaltenen flüchtigen Stoffen zumindest ein lokaler Gasaufnahmeraum (54, 62) zwischen dem Verbundbauteil (32) und einer Kammerwandung (56, 68) gebildet ist, der durch zumindest eine lokale gasdurchlässige Membran (58, 78) gegenüber dem Matrixmaterial abgesperrt ist, **dadurch gekennzeichnet, dass** in dem Gasaufnahmeraum (54, 62) zumindest ein formstabiler Gasspeicher (64, 66) positioniert ist, und wobei der formstabile Gasspeicher (64, 66) eine offenporige Materialstruktur aufweist.

9. Aufbau nach Anspruch 8, wobei an einer einem Bauteilbereich (40, 44) zugewandten Kontaktfläche (70, 72, 74, 76) die Membran (58, 78) lösbar angeordnet ist.

10. Aufbau nach Anspruch 9, wobei der Gasspeicher (64, 66) zumindest ein Abschnitt eines Formgebungselementes ist.

11. Aufbau nach einem der Ansprüche 8 bis10, wobei der Gasaufnahmeraum (54, 62) mit einer Absaugung (52, 90) in Fluidverbindung steht.

## Claims

1. Infusion method for producing a fibre-reinforced composite component (32) having textile semi-finished products which in a mould (4) that is open on one side are disposed in a chamber (8) to be evacuated and form the composite component (32) to be infiltrated by a matrix material, wherein at least one local gas-receiving space (54, 62) is formed between the composite component (32) and a chamber wall (56, 68), said gas-receiving space (54, 62) being blocked in relation to the matrix material by way of at least one local gas-permeable membrane (58, 78) and volatile substances contained in the matrix material and/or in the construction (31; 61; 89) escaping into said gas-receiving space (54, 62) when infiltrating, **characterized in that** at least one dimensionally stable gas reservoir (64, 66) is disposed in the gas-receiving space (54, 62), and wherein the dimensionally stable gas reservoir (64, 66) has an open-pore material structure.

2. Infusion method according to Claim 1, wherein the membrane (58, 80) is positioned on component faces that are planar to slightly curved.

3. Infusion method according to Claim 1 or 2, wherein the gas-receiving space (54, 62) is evacuated when evacuating the chamber (8).

4. Infusion method according to Claim 1, 2, or 3, wherein the gas-receiving space (54, 62) is disposed in the region of converging flow fronts.

5. Infusion method according to Claim 4, wherein the gas reservoir (64, 66) is used for supporting a component region (40, 44).

6. Infusion method according to Claim 5, wherein the gas reservoir (64, 66) for supporting a component region (40, 44) is combined with a closed shape-imparting element.

7. Infusion method according to one of the preceding claims, wherein the gases are retrieved from the gas-receiving space (54, 62) by way of a suction unit (52, 90).

8. Construction (31; 61; 89) for an infusion method for producing a fibre-reinforced composite component (32) having textile semi-finished products which in a mould (4) that is open on one side are deposited in a chamber (8) to be evacuated and form the composite component (32) to be infiltrated by a matrix material, wherein for receiving volatile substances that are contained in the matrix material and/or in the construction (31; 61; 89) at least one local gas-receiving space (54, 62) is formed between the composite component (32) and a chamber wall (56, 68), said local gas-receiving space (54, 62) being blocked in relation to the matrix material by at least one local gas-permeable membrane (58, 78), **characterized in that** at least one dimensionally stable gas reservoir (64, 66) is positioned in the gas-receiving space (54, 62), and wherein the dimensionally stable gas reservoir (64, 66) has an open-pore material structure.

9. Construction according to Claim 8, wherein the membrane (58, 78) is releasably disposed on a contact face (70, 72, 74, 76) that faces a component region (40, 44).

10. Construction according to Claim 9, wherein the gas reservoir (64, 66) is at least one portion of a shape-imparting element.

11. Construction according to one of Claims 8 to 10, wherein the gas-receiving space (54, 62) is fluidically connected to a suction unit (52, 90).

## Revendications

1. Procédé d'infusion pour la fabrication d'un élément composite renforcé par des fibres (32) avec des demi-produits textiles, qui sont disposés dans un outil (4) ouvert d'un côté dans une chambre à mettre sous vide (8) et qui forment l'élément composite (32) à infiltrer avec un matériau de matrice, dans lequel on forme entre l'élément composite (32) et une paroi de chambre (56, 68) au moins une chambre locale de réception de gaz (54, 62), qui est séparée du matériau de matrice par au moins une membrane locale perméable au gaz (58, 78) et dans laquelle des substances volatiles contenues dans le matériau de matrice et/ou dans la structure (31; 61; 89) s'échappent lors de l'infiltration, **caractérisé en ce que** l'on dispose dans la chambre de réception de gaz (54, 62) au moins un réservoir de gaz de forme stable (64, 66) et dans lequel le réservoir de gaz de forme stable (64, 66) a une structure de matière à pores ouverts.

2. Procédé d'infusion selon la revendication 1, dans lequel on positionne la membrane (58, 80) sur des faces planes à légèrement courbes de l'élément.

3. Procédé d'infusion selon la revendication 1 ou 2, dans lequel on met sous vide la chambre de réception de gaz (54, 62) lors de la mise sous vide de la chambre (8).

4. Procédé d'infusion selon la revendication 1, 2 ou 3, dans lequel on dispose la chambre de réception de gaz (54, 62) dans la région de convergence de fronts d'écoulement.

5. Procédé d'infusion selon la revendication 4, dans lequel on utilise le réservoir de gaz (64, 66) pour le soutien d'une région (40, 44) de l'élément.

6. Procédé d'infusion selon la revendication 5, dans lequel on combine le réservoir de gaz (64, 66) avec un élément de formage fermé pour le soutien d'une région (40, 44) de l'élément.

7. Procédé d'infusion selon l'une quelconque des revendications précédentes, dans lequel on prélève les gaz dans la chambre de réception de gaz (54, 62) au moyen d'une aspiration (52, 90).

8. Structure (31; 61; 89) pour un procédé d'infusion pour la fabrication d'un élément composite renforcé par des fibres (32) avec des demi-produits textiles, qui sont déposés dans une chambre à mettre sous vide (8) dans un outil (4) ouvert d'un côté et qui forment l'élément composite (32) à infiltrer avec un matériau de matrice, dans laquelle au moins une chambre locale de réception de gaz (54, 62) destinée à recevoir des substances volatiles contenues dans le matériau de matrice et/ou dans la structure (31; 61; 89) est formée entre l'élément composite (32) et une paroi de chambre (56, 68), et est séparée du matériau de matrice par au moins une membrane locale perméable au gaz (58, 78), **caractérisée en ce qu'**au moins un réservoir de gaz de forme stable (64, 66) est positionné dans la chambre de réception de gaz (54, 62) et dans laquelle le réservoir de gaz de forme stable (64, 66) présente une structure de matière à pores ouverts.

9. Structure selon la revendication 8, dans laquelle la membrane (58, 78) est disposée de façon amovible sur une face de contact (70, 72, 74, 76) tournée vers une région (40, 44) de l'élément.

10. Structure selon la revendication 9, dans laquelle le réservoir de gaz (64, 66) est au moins une partie d'un élément de formage.

11. Structure selon l'une quelconque des revendications 8 à 10, dans laquelle la chambre de réception de gaz (54, 62) est en liaison fluidique avec une aspiration (52, 90) .
